Europäisches Patentamt

European Patent Office

Office européen des brevets

(19)

(11) **EP 1 596 217 A1**

(12) **EUROPEAN PATENT APPLICATION**

(43) Date of publication:
**16.11.2005 Bulletin 2005/46**

(51) Int Cl.7: **G01S 5/14**, G01S 5/02

(21) Application number: **04425344.1**

(22) Date of filing: **14.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(71) Applicant: **Siemens Mobile Communications
S.p.A.**
**20126 Milano (IT)**

(72) Inventors:
• **Mazzucco, Christian**
  **38035 Moena (TN) (IT)**
• **Spagnolini, Umberto**
  **20046 Biassono (MI) (IT)**
• **Moretti, Lino**
  **20128 Milano (IT)**

(54) **Ranging method and apparatus for ultra wide bandwidth communication systems**

(57)     A method and an apparatus are disclosed for detecting, e.g. for ranging purposes, a first-arrival-path signal transmitted in a multipath, interfering environment such as in an Impulse Radio Multiple Access communication system. Each received signal sample in an observation period is taken as a candidate initial sample of said direct path signal. For each candidate sample, the observation period is divided into a corresponding pair of complementary windows, the first of which comprises the samples preceding the candidate and the other one comprising the remaining samples in the period. The signal energy is evaluated in both windows of each pair; and the initial sample of the first-arrival-path signal is detected the sample giving rise to windows whose energies maximise a likelihood ratio test, based on the energy ratio of the two windows in each pair.

FROM RF

FIG. 3

**Description**

Field of the invention

The present invention refers to transmission systems using wide bandwidth signals, more specifically ultra wide bandwidth (UWB) signals, and more particularly it concerns a first-arrival-path signal detection method and apparatus to be used in such systems, especially for ranging purposes.

Preferably, but not exclusively, the invention is applied in short-range wireless communication systems using impulse radio multiple access with time coding of the information.

Background of the Invention

The need of ascertaining the range between two locations, or the relative position of two objects, arises in several transmission systems, such as radar systems and mobile communication systems.

Considering in particular mobile communication systems, some applications need a very fine resolution. Examples are the so-called Mobile ad hoc networks (MANETs), which represent systems of wireless mobile nodes that can freely and dynamically self-organise into arbitrary and temporary network topologies, allowing people and devices to exchange data. The knowledge of the network topology at any time can be crucial in order to enhance performance of routing protocols and resource management procedures.

In such environments, use of techniques like Impulse Radio Multiple Access, which is based on transmission of Ultra Wide Bandwidth (UWB) signals, has been proposed to allow both data communication and ranging. Such a technique combines a very fine resolution with high bit rates, spectrum reuse and low power consumption even in a dense multipath environment, as is the case for indoor communications, which are the typical field of use of such systems.

Prior art ranging techniques for transmission systems exploiting UWB signals estimate the distance between a transmitter and a receiver from the Time of Arrival (ToA) under the radio Line of Sight (LoS) assumption, and they are based on a Maximum Likelihood criterion. They detect the first arriving pulse (the one having followed a direct or line-of-sight path between transmitter and receiver) by effecting a correlation of the received signal with a phase-shifted replica of the transmitted sequence. Different implementations of such techniques are disclosed in WO-A 96/03689, WO-A 03/010553 and in the article "Ranging in dense multipath environment using an UWB radio link", by J.Y. Lee and R.A. Scholtz, IEEE Journal on Selected Areas in Communications, vol. 20, No. 9, Dec. 2002, pp.1677-1683.

Correlation methods exhibit a good performance if the echoes are temporally resolvable and the transmitted sequence is perfectly known. In a dense multipath environment, even in large bandwidth systems, the echoes are far from being temporally resolvable: indeed, resolution entails a pulse distance of about 1 ns, whereas in practical use the echoes are spaced by few tenths of a nanosecond. In addition, the waveform distortion induced by the near-field coupling between antennas and the propagation environment makes the knowledge of the waveform far from being accurate. Furthermore, using the correlation technique entails a high computational burden.

Another prior art method, disclosed in WO-A 03/010897, evaluates the energy of a plurality of samples and compares it with a threshold. More particularly, the document measures first the standard deviation of the noise floor of the system to determine the threshold, and then the standard deviation of the received signal in successive windows of an observation period in which a transmitted information signal is surely present. The arrival of the direct-path signal is detected in the first window where the signal standard deviation exceeds the threshold. The standard deviation measurement is performed after having carried out a correlation of the received signal with a waveform template stored at the receiver.

Also this method suffers from the drawbacks inherent to the use of correlation techniques. Moreover, its accuracy is strongly dependent on the threshold determination, which in turn can give rise to stability problems.

It is on the contrary an object of the present invention to provide a method and an apparatus that do not require an accurate knowledge of the transmitted signal and that can be implemented in simple manner and without entailing a high computational burden. The above in order to privide a method not suffering from the dependance on any threshold determination.

Summary of the Invention

The invention provides a method of and an apparatus for detecting a first-arrival-path signal, in particular for ranging purposes, based on the evaluation of a likelihood ratio in a piecewise stationary process considering the abrupt changes of signal energy.

More particularly, the method of the invention comprises the steps of:

- successively taking each of a plurality of samples in an observation period as a candidate initial sample of said direct path signal;
- for each candidate sample, dividing the observation period into a corresponding pair of complementary windows, the first window in each pair comprising the samples preceding the candidate sample and the other one comprising the remaining samples in the period;
- evaluating the signal energy in both windows of each pair; and
- choosing as the actual initial sample of the first-arrival-path signal the sample giving rise to windows whose energies maximise a function related to the energy ratio of the two windows in each pair.

The apparatus of the invention for implementing the method comprises, downstream a sampling means for the digital acquisition of the received signal:

- energy evaluation circuitry for evaluating the energy of the received signal in each window of a plurality of successive pairs of complementary windows, each pair of windows being built by successively choosing each sample in the observation period as a candidate initial sample of said direct path signal and by including the samples preceding the candidate sample into the first window of the pair and the remaining samples into the second window of the pair; and
- first processing circuitry connected to the energy evaluation circuitry for receiving therefrom the energies of the different window pairs and determining, from the energy ratio of the two windows in each pair, a likelihood ratio for the different choices of candidate sample, the actual initial sample of the first-arrival-path signal being determined as the sample giving rise to windows whose energies maximise said likelihood ratio.

In a preferred application to impulse radio multiple access communication systems, in which the received signals (e.g. in the form of so-called Gaussian monopulses) exhibit a time correlation and a substantially exponential decay of the power delay profile, a temporal decorrelation (whitening) of the received signal and a compensation of the power delay profile of the samples in the second windows are also performed before the energy evaluation.
Advantageously, the energies are evaluated after having averaged corresponding samples over a plurality of observation periods.
Thus, the invention provides a method and an apparatus that do not exhibit the rigid time constraints of the prior art and do not require calculating the correlation with a replica of the transmitted waveform, so that they do not require a precise knowledge of the latter. Dispensing with the correlation also renders the method and the apparatus of the invention much simpler than the prior art and less sensitive to system calibrations. The knowledge of the power delay profile, necessary for certain applications, do not impose stringent constraints, since an approximate knowledge is enough in many cases.

Brief description of the drawings

A preferred embodiment of the invention, given by way of non-limiting example, will now be disclosed with reference to the accompanying drawings, in which:

- Fig. 1 is a representation of a received signal;
- Fig. 2 is a graphical representation of the alignment operation;
- Fig. 3 is a schematical flow chart of the method of the invention;
- Fig. 4 is a schematical block diagram of the apparatus according to the invention;
- Figs. 5 and 6 are plots of the performance of the invention; and
- Fig. 7 is a graph comparing the performance of the invention and of the prior art technique when applied to an indoor impulse radio multiple access communication system.

Description of the preferred embodiment

The theoretical principles of the invention will first be disclosed, with particular reference to an impulse radio multiple access (IRMA) communication system in which the users share the radio channel by using a Time-Hopping (TH) code.
It is not necessary to go here into the details of time hopping coding, since such aspects are not affected by the invention. A general discussion of the features of time-hopping multiple access systems employing impulse radio technology can be found in the article "Ultra-Wide Bandwidth Time-Hopping Spread-Spectrum Impulse Radio for Wireless Multiple-Access Communications", by M.Z. Win and R.A. Scholtz, IEEE Transactions on Communications, vol. 58, no. 4, April 2000, pp. 679-689.

Adopting a binary TH-PPM (Time Hopping-Pulse Position Modulation) scheme, the received signal is:

$$r(t) = \sum_{k=1}^{N_u} \sum_{j=0}^{N_s} g^{(k)} \left( t - jT_f - c_j^{(k)} T_c - \delta \alpha_{\lfloor j/N_s \rfloor}^{(k)} \right) + n(t) \qquad (1)$$

where

- index "k" refers to the k-th of Nu users,
- $g^k(t)$ is the Channel Impulse Response (CIR) obtained as combination of large multipaths, given by:

$$g^{(k)}(t) = \sum_{l \geq 0} \beta_l^{(k)} w \left( t - \tau_l^{(k)} \right) \qquad (2)$$

where index "l" refers to the l-th multipath component of amplitude $\beta^{(k)}_l$ and delay $\tau^{(k)}_l$, $\forall l$, and w(t) is the baseband UWB monopulse;
- Tf is the duration of the time frame, and it is divided into Nh = Tf/Tc slots (Tc = chip period);
- $\{c^{(k)}_l\}$, $0 \leq c^{(k)}_l \leq$ Nh is the TH code, which provides additional temporal shift to manage multiple access;
- $\alpha^{(k)}_i$ denotes the information generated by the k-th user;
- $\delta$ is the PPM time shift;
- Ns is the number of pulses used for the transmission of the same information bit; when Ns > 1, a repetition code is introduced;
- n(t) is a noise term, including the thermal noise.

For our purposes the received signal can be also written in terms of the useful signal of the k-th user, the multiple user interference (MUI) and the Additive White Gaussian Noise (AWGN):

$$r(t) = r^{(k)}(t) + \sum_{i \neq k} r^{(i)}(t) + n(t) \qquad (3)$$

where the summation represents the MUI.

At first, we will consider MUI according to the Standard Gaussian Approximation (SGA). The validity of the SGA is reasonable when the number of users is large, while it worsens for low bit rates and low values of pulse repetition frequency.

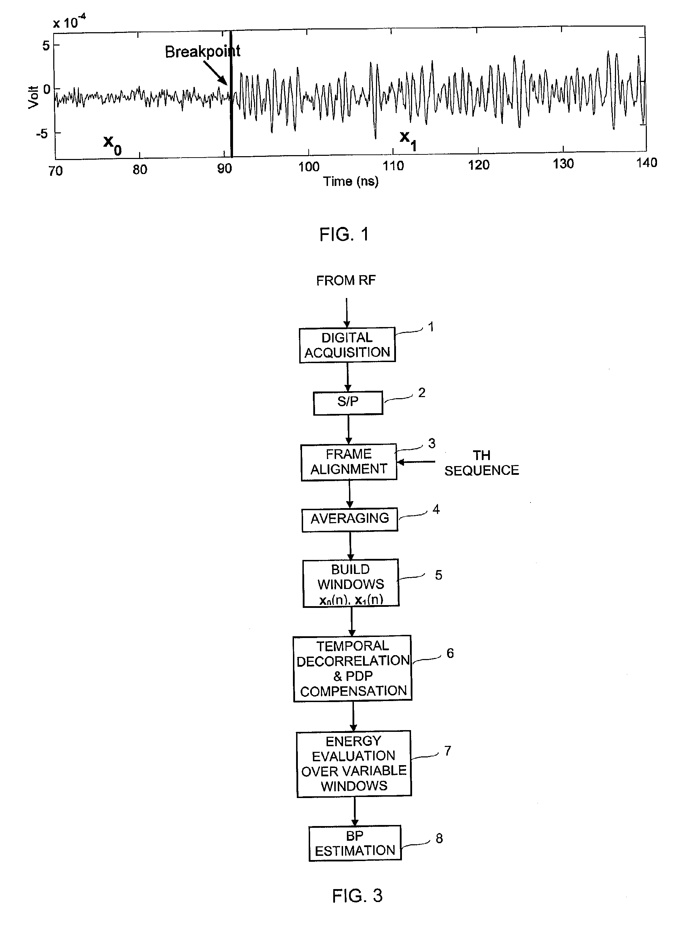

To simplify the reasoning, reference is made to Figure 1. The received signal is modelled as a zero-mean Gaussian process characterised by two different variances $\sigma^2_0$, $\sigma^2_1$. The first process portion (the left portion in the Figure), with variance $\sigma^2_0$, corresponds to mere noise, whereas the second portion (the right portion in the Figure) with variance $\sigma^2_1$ contains information arriving at the receiver, so that $\sigma^2_1 \geq \sigma^2_0$. The passage from the first to the second portion is called "Breakpoint" (indicated by a vertical line in the drawing). Considering for sake of simplicity a single user, in line-of-sight propagation environment the first arriving information signal is the one having followed the line-of-sight path. Thus the estimate of the time of arrival for the line of sight is equivalent to locating the breakpoint (BP) in a piecewise stationary process characterised by different powers before and after the BP. Based on this assumption, the BP detection is equivalent to segmentation of non-stationary processes with abrupt changes

For the present invention, the observation period is a frame (i.e. the time interval during which each user transmits one and only one impulse), and L samples of the received signal are taken in the observation period. A value of L suitable for practical implementation is in the range 500 to 1000 samples. Denoting by no the sample of the observed sequence corresponding to BP, the two process portions with different variances can be written x(i) ~ N(0, $\sigma^2_0$) for i < no, and x(i) ~ N(0, $\sigma^2_1$) for i $\geq$ no, the expression x(i) ~ N(0, $\sigma^2_j$) (j = 0, 1) indicating that x(i) is a Gaussian variable with mean value zero and variance $\sigma^2_j$.

The problem here is to estimate the BP from measurements x = $[x_0, ..., x_{L-1}]^T$. As known to the skilled in the art, this can be made by the optimal classification rule derived from the Neyman-Pearson criterion extended to multiple hypotheses, as disclosed in "Radar Detection", by J.V. Di Franco and W.L. Rubin, Prentice-Hall, Englewood Cliffs, N.

J., 1968. The null hypothesis $H_0$ indicates the absence of any change (or, equivalently, $\sigma^2_1 = \sigma^2_0$), while $h_n$ indicates the hypothesis of having the BP in the n-th sample of the observed sequence. The two hypotheses can be formally denoted as:

The optimal decision rule is based on the General Likelihood Ratio (GLR) test

$$H_0 \rightarrow x_i \sim N(0,\sigma_0^2) \; i \in [0, L - 1] \tag{4}$$

$$h_n \quad \rightarrow \begin{cases} x(i) \sim \mathcal{N}(0, \sigma_0^2) & i \in [0, n-1] \\ x(i) \sim \mathcal{N}(0, \sigma_1^2) & i \in [n, L-1] \end{cases} \tag{5}$$

comparing the likelihood for the corresponding multiple hypotheses compared to $H_0$.

For each hypothesis $h_n$, vector **x** is split into two subvectors $\mathbf{x}_0(n)$, $\mathbf{x}_1(n)$ such that $\mathbf{x} = \mathbf{x}_0(n) \cup \mathbf{x}_1(n)$. Subvector $\mathbf{x}_0(n) = [x(0), ...,x(n-1)]^T$ includes the samples preceding the n-th sample and subvector $\mathbf{x}_1(n) = [x(n), ..., x(L-1)]^T$ includes the remaining samples in the observation period. Test statistics between alternative hypotheses are based on inner products:

$$\Phi_B(n) = x_0(n)^T x_0(n) \tag{6}$$

$$\Phi_F(n) = x_1(n)^T x_1(n) \tag{7}$$

for samples before ("Backward") and after ("Forward") the BP, respectively. As known, said inner products represent the energy of the samples in the respective window. Since the probability density function (pdf) for $\Phi_B(n)$ and $\Phi_F(n)$ is the so-called Gamma pdf, with some algebra that is known to the skilled in the art, the optimal estimator for the BP can be derived as:

$$\hat{n}_0 = \arg\max [\Upsilon(n)] \tag{8}$$

where:

$$\Upsilon(n) = C(n) \cdot \left(\frac{\Phi_B(n)}{\Phi_F(n)}\right)^{n/2} \cdot \frac{1}{\Phi_B(n)} \cdot \left(\frac{\Phi_B(n)}{\Phi_F(n)} + 1\right)^{1-L/2} \tag{9}$$

and C(n), which collects terms that are independent from the samples of x, is given by

$$C(n) = \frac{\Gamma(L/2)}{\Gamma(n/2)\Gamma\left(\dfrac{L-n}{2}\right)} \tag{10}$$

Otherwise stated, maximising Y corresponds to finding the value of n that maximises the Likelihood Ratio Test given by relation

$$\Lambda(\Phi,n) = \frac{p_{\Phi|h_n}(\Phi|h_n)}{p_{\Phi|H_0}(\Phi|H_0)} \tag{11}$$

where p denotes the probability density, $\Phi$ is the sum of $\Phi_B$ and $\Phi_F$, and "|" denotes the conditioning of the probability density function to hypotheses $h_n$ and $H_0$, respectively

Thus, according to the invention, a segmentation of each frame of the received signal is performed to obtain pairs of windows varying in complementary manner. Each pair of windows corresponds to a different assumption for the position of the breakpoint in the frame, and all samples in the frame are tested as candidate breakpoint sample, i. e. as candidate for the initial sample of the first-arrival-path signal. A window in each pair comprises the samples preceding the sample where the assumed breakpoint is located, and the other window comprises the assumed breakpoint sample and the following ones. The likelihood ratio test (which, as shown in equation (9), depends on the ratio of the energies in the two windows) is performed on the various hypotheses to individuate the hypothesis that better meets the energy statistics of the signal, whereby an optimal estimation of the breakpoint position can be carried out.

Practical implementations for real-time systems ask for complexity reduction of Y(n) in equation (9). A simple (but computationally relevant) approximation can be derived from computing the logarithm of Y(n) and leads to the following expression, with very low computational complexity:

$$\Upsilon_1(n) = -2\log C(n) - n\log \Phi_B(n) - (L-n)\log \Phi_F(n) + L\log (\Phi_B(n) + \Phi_F(n)). \tag{12}$$

where $\log C(n) = \Gamma n(L/2) - \Gamma \ln(n/2) - \Gamma \ln((L-n)/2)$. In the latter relation, $\Gamma \ln(n) = \log\Gamma(n)$ and can be approximated at will (even by only two coefficients). Details on the Gamma function can be found in "NUMERICAL RECIPES IN C: THE ART OF SCIENTIFIC COMPUTING", Cambridge University Press, 1988-1992, Chapter 6.1, pp. 213 and fol.

The correcting term based on C(n) prevents biasing of the BP estimator.

The above explanations have been given under the simplifying assumption that UWB signals can be modelled as white Gaussian stationary processes before/after the BP, and therefore the relevant relations can be applied to build an optimum BP estimator whenever the received signal actually conforms to said model. Since generally this is not true for UWB signals in real cases, the previously discussed segmentation method has to be modified in order to be adapted to the real situation.

For the purposes of the invention, the UWB signals can be modelled as temporally correlated processes (correlation arising from the transmitted waveform) with an exponential decaying power delay profile (PDP), with decaying constant equal to the Root Mean Square Delay Spread $\tau_{rms}$ of the channel impulse response. This is the most commonly accepted PDP model for indoor channels, and it has been demonstrated both theoretically and with experimental data. Now, let $yo(n) - N(0, \mathbf{R_0})$ for n < no and $y_1(n) \sim N(0, \mathbf{R_1})$ for $n \geq n_0$ be Gaussian processes, where $\mathbf{R_0}$ is the covariance matrix of the temporally correlated process before the BP and $\mathbf{R_1}(n)$ denotes the time-varying covariance matrix of the exponential decaying random variables.

Since $\mathbf{R_0}$ and $\mathbf{R_1}$ are defined as positive, they can be factorised to give

$$R_j = Q_j^{-1}(Q_j^{-1})^T, \ (j = 0, 1),$$

where $\mathbf{Q_j}$ is upper triangular. Based on those relations, white stationary Gaussian processes $\mathbf{u_j} = \mathbf{Q_j}\mathbf{u_j}$ can be considered.

The optimum BP estimator taking into account both the temporal correlation and the power delay profile is now based on the following relations:

$$\Phi_B(n) = y_0(n)^T R_0^{-1} y_0(n) \tag{13}$$

$$\Phi_F(n) = y_1(n)^T R_1^{-1} y_1(n) \tag{14}$$

A sub-optimal but computationally efficient implementation of relations (13) and (14) is obtained by a pre-whitening FIR (Finite Impulse Response) filtering. This operation allows decoupling the problem of the temporal decorrelation from the PDP compensation because it leads $\mathbf{R_0}^{-1}$ and $\mathbf{R_1}^{-1}(n)$ to be diagonal. In particular the elements of diag[$\mathbf{R_1}^{-1}$] are the coefficients of the PDP of the received signal. However, to avoid numerical instability, the inner products (12) can be based on reduced set of measurements $\mathbf{y_j(n)}$.

The application of the disclosed technique in an IRMA environment can take also advantage of the manner in which the information of the different users is transmitted, i.e., in the specific case, of the time hopping coding.

Indeed, when two users want to exchange data, they have to share the knowledge of the respective TH codes. According to the invention, based on such knowledge, each receiver collects a predetermined number Ns of time frames, corresponding with the number of frames needed to transmit an information bit, re-aligns them according to the TH code and averages the aligned frames.

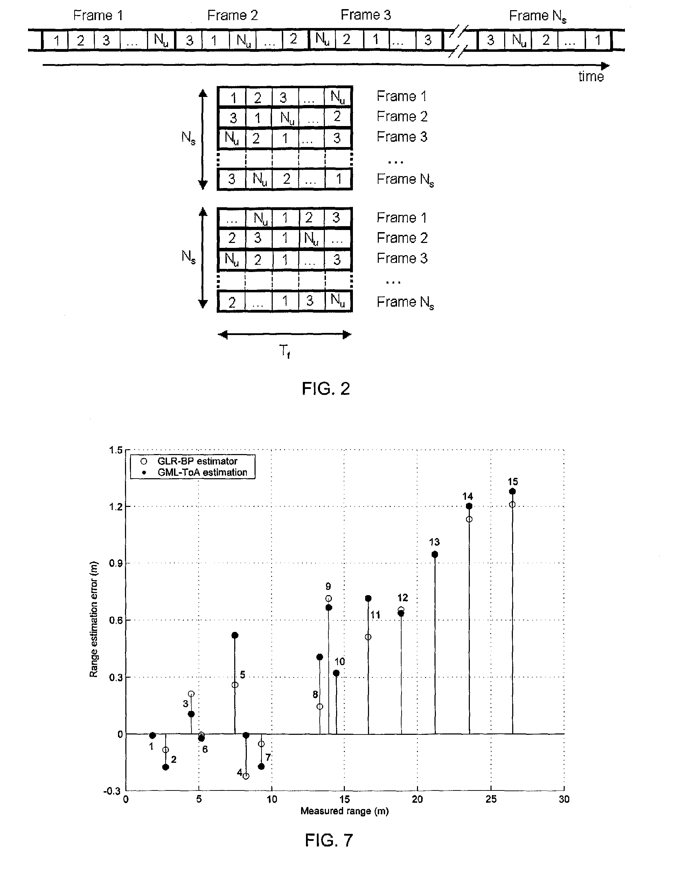

Fig. 2 shows the alignment operation. The upper portion of the Figure shows a sequence of Ns frames having each Nu slots, which are allotted to users 1, 2 ... Nu. The slot assigned to a user in each frame varies depending on the hopping code. The Ns frames are stored (middle portion of the Figure) and then, by suitable rotations, they are aligned so that the slots allotted to the transmitter of interest (here that of user 1) are in a same time position in the frame (lower portion of the Figure).

In order to prevent pulse repetition interference, it is necessary that approximately $Tf > 2\tau_{rms}$, $\tau_{rms}$ having been defined above. To grant a coherent sum of the signal of interst it is necessary that Ns·Tf be less than the channel coherence time. This means that with the frame durations typical of the UWB systems, this can be achieved by averaging e.g. 50 to 1000 frames. The average operation increases the signal of interest and reduces the MUI because the useful signals have the same CIR and their sum is coherent (if the average is carried out just over Ns frames), whereas interferers' CIRs are summed incoherently, since the TH codes are random varying on a frame-to-frame basis.

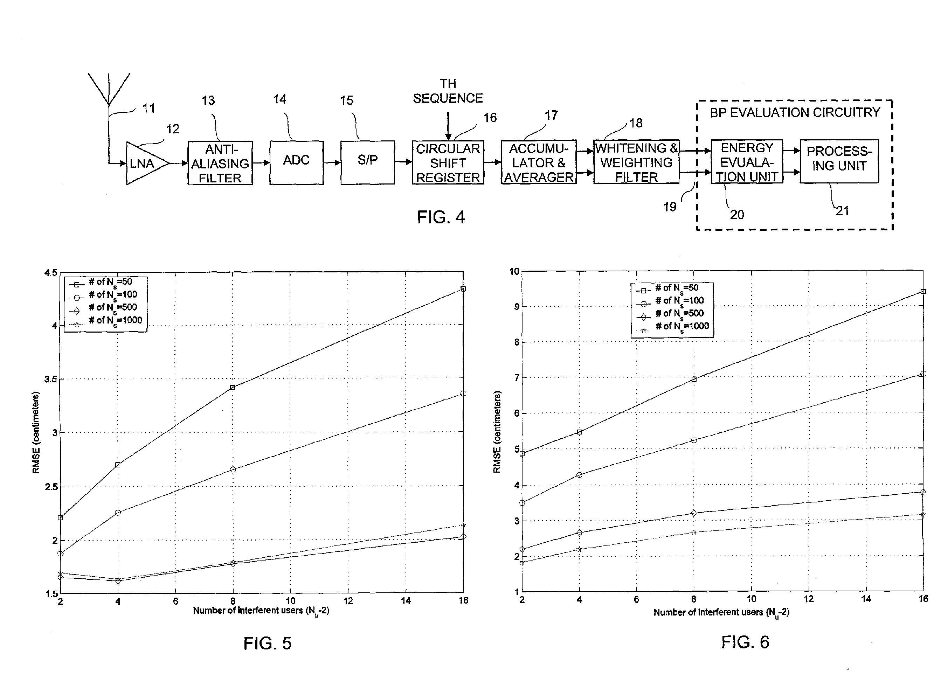

The above-described method is summarised in the flow chart of Fig. 3. The RF signal is sampled and converted into digital form at step 1. At step 2, the vectors of samples so obtained are converted into parallel form, with parallelism Nu (see Fig. 2b) and, by using the TH sequences, each received frame is aligned with respect to the desired slot (see Fig. 2c). The predetermined number Ns of aligned frames are averaged at step 4. The different hypotheses (i.e. the different pairs of windows) are created at step 5. For each hypothesis, the averaged samples are processed at step 6 as indicated by equations (12) and (13). In practice, such operations are the time decorrelation of the samples of the received signal (whitening filtering) and the compensation of the power profile decay of the signal in the forward window (which corresponds to a weighting with suitable coefficients). Processing step 6 also includes the pre-whitening FIR filtering discussed above, if decoupling the time decorrelation and the PDP compensation is desired. At step 7, the energies are computed for each pair of forward and backward windows, and at step 8 the energies computed in this manner are processed to determine the GLR and determine the optimum breakpoint position $n_0$.

A block diagram of an apparatus implementing the method is shown in Fig. 4.

The apparatus is part of or connected to the receiver of the IRMA system. The signals received at UWB antenna 11 are fed to a low noise amplifier 12, followed by an anti-aliasing filter 13. The filtered signal are fed to analog-to-digital converter (ADC) 14, which samples the received frames with the desired frequency, and then to a serial-to-parallel converter 15 emitting the received frames with a parallelism Nu. Taking into account that typical frame durations range from 10 to 100 ns, a very fast ADC 14 is to be used to obtain the desired number of samples (500 to 1000) per frame.

The parallelised data flow is sent to a circular-shift register 16 that, based upon the TH sequence, aligns the received frames relative to the desired slot. After alignment, the frames are sent to averaging circuit 17, which accumulates the samples of the Ns frames and computes the average of the accumulated samples. Generally, said average is a simple arithmetical average.

Averaging circuit 17 is followed by a first processing unit 18, which performs at least the functions of a whitening filter and a weighting filter, as well as those of a FIR filter, if the pre-whitening FIR filtering is performed.

Processing unit 18 feeds the processed signals to breakpoint evaluation circuitry 19, which comprises an energy evaluation circuitry 20 and a second processing circuitry 21. Energy evaluation circuitry 20 performs the energy calculations for the forward and backward windows for each possible position of the breakpoint in the frame. In a practical and particularly simple implementation, circuitry 20 determines the energies as sums of squares. Processing circuitry 21 processes the energies in order to maximise the likelihood ratio test of equations (8) to (12) and supplies utilisation devices (not shown) with the information about the position of the breakpoint in the frame. From the breakpoint position the utilisation devices can obtain any information of interest, in particular the range between transmitter and receiver.

Note that in Fig. 4 two inputs have been shown for processing unit 18 and the subsequent blocks, to indicate that the blocks operate on the samples of the two complementary windows.

Figs. 5 and 6 show the RMSE performance of the system according to the invention versus the number of interfering users Nu - 2 for different values of parameter Ns, for a line-of-sight condition and a hybrid line-of-sight/out-of-sight condition, respectively. Both performance measurements show the positive effect of the averaging. In particular, Figs. 5 and 6 show that there is a performance improvement as the number of frames increases, the improvement being relatively faster in the lower portion of the indicated range, e.g. up to about 500 frames.

Lastly, Fig. 7 shows a comparison between the results of the measurements of the distance between a receiver and a plurality of transmitters inside a building, made by the technique according to the invention (GLR-BP) and by a system using the prior art maximum likelihood technique (GML-ToA). The drawing clearly shows that the invention allows obtaining comparable or even slightly better overall performance, and this through the use of a far simpler apparatus.

It is clear that the above description is given only by way of non-limiting example and that changes and modifications are possible without departing from the scope of the invention. For instance, other functions of the energy ratio can be used in place of the likelihood. Also, even if the invention has been disclosed with particular reference to its application for ranging in IRMA systems with a time hopping coding, it can be employed in connection with other wide band communication systems with a time coding of the information, whenever a propagation delay estimation is required, e.g. for synchronisation purposes. Moreover, in general, the invention can be used for similar purposes also in other transmission systems using wide band signals, e.g. in radar systems.

**Claims**

1.  A method of detecting a first-arrival-path signal in a transmission system where wide band signals are transmitted, the method comprising an evaluation of a parameter related to the energy of a plurality of samples of a received signal resulting from a multipath propagation of a transmitted signal and being **characterised in that** it comprises the steps of:

    -   successively taking each of a plurality of samples in an observation period as a candidate initial sample of said direct path signal;
    -   for each candidate sample, dividing the observation period into a corresponding pair of complementary windows, the first window in each pair comprising the samples preceding the candidate sample and the other one comprising the remaining samples in the period;
    -   evaluating the signal energy in both windows of each window pair; and
    -   choosing as optimum initial sample the sample giving rise to windows whose energies maximise a function related to the energy ratio of the two windows in each pair.

2.  The method as claimed in claim 1, **characterised in that** said function related to the energy ratio of the two windows in each pair is the likelihood ratio.

3.  The method as claimed in claim 1 or 2, **characterised in that** said wide band signals are time-correlated signals exhibiting a decaying power delay profile, and **in that** for said energy evaluation a time decorrelation of the signal samples in the observation period and a compensation of the power delay profile in each second window are carried out.

4.  The method as claimed in claim 3, **characterised in that** said time decorrelation and compensation of the power delay profile are performed jointly.

5.  The method as claimed in claim 3, **characterised in that** it further comprises a pre-whitening filtering of the received signal for decoupling the time decorrelation from the compensation of the power delay profile.

6.  The method as claimed in any preceding claim, **characterised in that** said energy evaluation is performed on samples obtained by averaging corresponding received samples in a plurality of observation periods.

7.  The method as claimed in any preceding claim, **characterised in that** said transmission system is a radio communication system in which wide bandwidth signals using a time coding are transmitted.

8.  The method as claimed in claim 7, **characterised in that** said communication system is an Impulse Radio Multiple Access communication system and each observation period corresponds to a time frame in which a single impulse per user is transmitted.

9.  The method as claimed in claim 8, **characterised in that** said Impulse Radio Multiple Access communication is a system with a Time Hopping coding and **in that**, before said averaging, a realignment of the plurality of frames is performed with respect to a desired frame slot.

10. The method as claimed in claim 9, **characterised in that** said averaging is performed over a number of frames corresponding to the number of pulses used to transmit an information bit.

11. The method as claimed in claim 10, **characterised in that** said averaging is performed over 50 to 1000 frames.

12. The method as claimed in any preceding claim, **characterised in that** the received signal samples are sample of signals coming from a location whose distance from a receiving location is to be determined.

**13.** An apparatus for detecting a first-arrival-path signal in a transmission system where wide band signals are transmitted, the apparatus comprising means (14) for sampling a received signal resulting from a multipath propagation of a transmitted signal to build a plurality of received signal samples and means (19) for evaluating and processing a parameter related to the energy of a plurality of received signal samples within an observation period, the apparatus being **characterised in that** said evaluating and processing means (19) comprise:

- energy evaluation circuitry (20) for evaluating said energy-related parameter in each window of a plurality of successive pairs of complementary windows, each pair of windows being built by successively choosing each sample in the observation period as a candidate initial sample of said direct path signal and by including the samples preceding the candidate sample into the first window of the pair and the remaining samples into the second window of the pair; and
- first processing circuitry (21) connected to the energy evaluation circuitry (20) for receiving therefrom the energy-related parameters of the different window pairs and calculating a ratio of the parameters evaluated for the two windows in each pair, the optimum initial sample of the first-arrival-path signal being the sample giving rise to windows whose energy-related parameters are such as to maximise a function related to said ratio.

**14.** The apparatus as claimed in claim 13, **characterised in that** said function related to the energy ratio of the two windows in each pair is the likelihood ratio.

**15.** The apparatus as claimed in claim 13 or 14, **characterised in that** said signals are time-correlated signals exhibiting a decaying power delay profile, and the apparatus further comprises a second processing circuitry (18), connected upstream the energy evaluation circuitry (20) and arranged to perform a temporal decorrelation of the received signal samples and a compensation of the power delay profile in each second window.

**16.** The apparatus as claimed in claim 15, **characterised in that** said second processing circuitry (18) is arranged to jointly evaluate the time correlation and the power delay profile.

**17.** The apparatus as claimed in claim 15, **characterised in that** said second processing circuitry (18) is arranged to perform a pre-whitening filtering of the received signal samples to decouple the time decorrelation from the compensation of the power delay profile.

**18.** The apparatus as claimed in any of claims 13 to 17, **characterised in that** it further comprises an averaging unit (17) connected upstream said second processing circuitry (18) to calculate an average of corresponding samples in a plurality of observation periods.

**19.** The apparatus as claimed in any of claims 13 to 18, **characterised in that** said transmission system is a radio communication system in which ultra-wide band signals using a time coding are transmitted.

**20.** The apparatus as claimed in claim 19, **characterised in that** said communication system is an Impulse Radio Multiple Access system, and each observation period corresponds to a time frame in which a single impulse per user is transmitted.

**21.** The apparatus as claimed in claim 20, **characterised in that** said system is an Impulse Radio Multiple Access system with a Time Hopping coding, and **in that** the apparatus further comprise means (16), connected upstream said averaging unit (17), for aligning the plurality of frames with respect to a desired frame slot.

**22.** The apparatus as claimed in claim 21, **characterised in that** said aligning means (16) comprise circular shift registers.

**23.** The apparatus as claimed in any of claims 18 to 22, **characterised in that** said averaging unit (17) is arranged to average the samples of a number of frames corresponding to the number of pulses used to transmit an information bit.

**24.** The apparatus as claimed in any of claims 19 to 23, **characterised in that** said sampling means (13) comprise an ultra-fast analog-to-digital converter.

**25.** The apparatus as claimed in claim 24, **characterised in that** said sampling means (13) are arranged to sample the received signal at a sampling frequency such as to result in 500 to 1000 samples per frame.

26. The apparatus as claimed in any of claims 13 to 25, **characterised in that** the received signals are signals coming from a unit whose distance from a receiver to which the apparatus is connected is to be determined.

FIG. 1

FIG. 3

FIG. 2

FIG. 7

FIG. 4

FIG. 5

FIG. 6

**European Patent Office**

**EUROPEAN SEARCH REPORT**

Application Number

EP 04 42 5344

## DOCUMENTS CONSIDERED TO BE RELEVANT

| Category | Citation of document with indication, where appropriate, of relevant passages | Relevant to claim |
|---|---|---|
| Y | EP 1 167 993 A (HITACHI LTD) 2 January 2002 (2002-01-02)<br><br>* abstract *<br>* paragraphs [0001] - [0006], [0033] *<br>----- | 1,6-8, 12,13, 18-20,26 |
| Y | US 4 587 523 A (SHUPE CHESTER D) 6 May 1986 (1986-05-06)<br><br>* abstract *<br>* column 3, line 39 - line 52 *<br>----- | 1,6-8, 12,13, 18-20,26 |

CLASSIFICATION OF THE APPLICATION (Int.Cl.7)

G01S5/14
G01S5/02

TECHNICAL FIELDS SEARCHED (Int.Cl.7)

G01S

The present search report has been drawn up for all claims

| Place of search | Date of completion of the search | Examiner |
|---|---|---|
| The Hague | 7 December 2004 | Zaccà, F |

EPO FORM 1503 03.82 (P04C01)

**ANNEX TO THE EUROPEAN SEARCH REPORT
ON EUROPEAN PATENT APPLICATION NO.**

EP 04 42 5344

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2004

| Patent document cited in search report | | Publication date | Patent family member(s) | | Publication date |
|---|---|---|---|---|---|
| EP 1167993 | A | 02-01-2002 | JP<br>EP<br>US<br>US<br>US | 2002014152 A<br>1167993 A2<br>2002149511 A1<br>6459402 B1<br>2004066332 A1 | 18-01-2002<br>02-01-2002<br>17-10-2002<br>01-10-2002<br>08-04-2004 |
| US 4587523 | A | 06-05-1986 | NONE | | |